# EUROPÄISCHE PATENTSCHRIFT

(11) **EP 0 866 218 B1**
(45) Veröffentlichungstag und Bekanntmachung des Hinweises auf die Patenterteilung: **23.07.2003**
(21) Anmeldenummer: 98102587.7
(22) Anmeldetag: 14.02.1998
(51) Int. Cl.: F01N 3/08, F01N 3/28

(54) **Adsorber-Katalysator- Kombination für Brennkraftmaschinen**
Adsorber-catalytic converter combination for internal combustion engines
Combinaison d'un adsorbeur et d'un convertisseur catalytique pour moteurs à combustion interne

(30) Priorität: 22.03.1997 DE 19712087
(43) Veröffentlichungstag der Anmeldung: 23.09.1998
(73) Patentinhaber: Dr.Ing.h.c. F. Porsche Aktiengesellschaft, 70435 Stuttgart (DE); DaimlerChrysler AG, 70567 Stuttgart (DE); Bayerische Motoren Werke Aktiengesellschaft, 80809 München (DE); Volkswagen Aktiengesellschaft, 38436 Wolfsburg (DE)
(72) Erfinder: Küper, Paul, Dr., 75446 Wiernsheim (DE); Sebbesse, Wulf, 80643 München (DE); Huss, Roland, 73733 Esslingen (DE); Degen, Alf, 71292 Friolzheim (DE)

(56) Entgegenhaltungen:
- EP-A- 0 661 098
- EP-A- 0 908 225
- DE-A- 4 314 043
- PATENT ABSTRACTS OF JAPAN vol. 016, no. 413 (C-0980), 2.September 1992 & JP 04 141219 A (MAZDA MOTOR CORP), 14.Mai 1992,
- PATENT ABSTRACTS OF JAPAN vol. 018, no. 534 (M-1685), 11.Oktober 1994 & JP 06 185342 A (MAZDA MOTOR CORP), 5.Juli 1994,

## Beschreibung

Die Erfindung betrifft eine Kombination eines Adsorbers mit einem Katalysator für Brennkraftmaschinen nach dem Oberbegriff des Hauptanspruchs und wie es z.B. bereits aus der JP-A04141219 bekannt ist.

Aus dieser JP-A- 04141219 sowie auch aus der JP-A-06185342 ist es bekannt, zur Abgasentgiftung von Brennkraftmaschinen zunehmend sowohl Katalysatoren wie auch Adsorber einzusetzen, um die Emissionen nach dem Kaltstart der Brennkraftmaschine, d.h. wenn der Katalysator seine Betriebstemperatur noch nicht erreicht hat, zu vermeiden. Bei diesen Adsorbern bzw. Katalysatoren handelt es sich um Keramik- oder Metallträger mit Wabenstruktur, die entsprechend beschichtet sind. Hierbei soll der Adsorber nach dem Kaltstart der Brennkraftmasche bestimmte Abgasbestandteile, insbesondere HC oder NO_{X}, aufnehmen und so lange zwischenspeichern, bis der nachgeschaltete Katalysator seine Betriebstemperatur erreicht hat. In diesem Zusammenhang ergibt sich das Problem, daß die Desorptionstemperatur des Adsorbers, d.h. die Temperatur ab der der Adsorber die aufgenommenen Abgasbestandteile wieder abgibt, höher oder zumindest gleich groß der Temperatur sein muß, bei der im Katalysator die Umwandlung der besagten Abgasbestandteile beginnt (Light-off-Temperatur).

Es sind Beschichtungen für Adsorber und Katalysatoren bekannt geworden, bei denen die Desorptionstemperatur der adsorbierend wirksamen Beschichtung im Bereich der Light-off-Temperatur der katalytisch wirksamen Beschichtung liegt.

Aus den bereits genannten Druckschriften sowie aus der EP 0 661 098 ist es bekannt, die Adsorber-Katalysator-Kombination in wechselweisen Schichten von adsorbierend und katalytisch beschichteten Zonen aufzubauen, die in Bezug auf den Abgasstrom in Reihe geschaltet sind. Durch die Trennung der adsorbierend bzw. katalytisch wirksamen Zonen ist eine gegenseitige Beeinflussung der hierbei verwendeten Materialien ausgeschlossen; es wird eine Integralbeschichtung aus adsorbierend und katalytisch wirksamen Material grob nachgebildet, indem eine Aufteilung in Bereiche, die nur adsorbierend wirksam beschichtet sind, und in Bereiche, die nur katalytisch wirksam sind, vorgenommen ist. Anders ausgedrückt werden Stufen aus je einem adsorbierend wirkenden Bereich und einem stromabfolgenden katalytisch wirkenden Bereich aneinandergereiht.

Üblicherweise sollen die stromabfolgenden katalytisch wirkenden Bereiche wirksam werden, bevor, oder unwesentlich nachdem, die Desorption des jeweils stromauf angeordneten adsorbierend wirkenden Bereiches einsetzt. Ohne weitere Maßnahmen wirkt jedoch der stromauf befindliche adsorbierend wirkende Bereich als Wärmesenkung und heizt sich daher schneller auf, als der stromab folgende katalytisch wirkende Bereich. Außerdem erreicht der stromab folgende katalytisch wirkende Bereich seine Wirksamkeit (Light-Off-Temperatur) deutlich später als in einem System ohne vorgeschalteten adsorbierend wirkenden Bereich.

Da die Desorptionstemperatur des stromauf liegenden adsorbierend wirkenden Bereiches im Bereich der Light-Off-Temperatur der stromab folgenden katalytisch wirkenden Bereiches liegt, beginnt die Desorption, obwohl der nachfolgende katalytisch wirkende Bereich noch nicht wirksam ist. Die desorpierten Stoffe werden daher im katalytisch wirkenden Bereich nicht umgewandelt Da zusätzlich, wie oben beschrieben, der katalytisch wirkende Bereich später als in einem System ohne vorgeschalteten adsorbierend wirkenden Bereich seine Wirksamkeit erreicht, ist die Emission in der Summe höher als die eines rein katalytisch wirkenden Systems ohne vorgeschalteten adsorbierend wirkenden Bereich.

Es ist nun Aufgabe der Erfindung, eine Adsorber-Katalysator-Kombination zu schaffen, die hinsichtlich ihres Speicher- und Umwandlungsverhaltens optimiert ist.

So ist es vorteilhaft, die adsorbierend wirkenden Zonen thermodynamisch so auszulegen, daß sie einen geringeren Wärmeübergang oder eine höhere Wärmekapazität oder beides aufweisen als die katalytisch wirkenden Zone.

Es wird daher vorgeschlagen, das System aus adsorbierend und katalytisch wirkenden Bereichen geometrisch und materialseitig so zu konzipieren, daß sich
a) zwischen Abgas und einem Trägermaterial im adsorbierend wirkenden Bereich eine große Temperaturdifferenz und
b) zwischen Abgas und dem Trägermaterial im katalytisch wirkenden Bereich eine kleine Temperaturdifferenz und
c) zwischen der Eintrittstemperatur und der Austrittstemperatur im adsorbierend wirkenden Bereich eine kleine Temperaturdifferenz einstellt.

Hiermit ist erreicht, daß zumindest im Eintrittsbereich des katalytisch wirkenden Bereiches, bzw. im gesamten katalytisch wirkenden Bereich, die Temperatur des Trägermaterials höher ist als die Temperatur im Austrittsbereich des stromauf befindlichen adsorbierend wirkenden Bereiches oder im gesamten stromauf befindlichen adsorbierend wirkenden Bereich. So kann der katalytisch wirkende Bereich seine Light-Off-Temperatur auch dann vor Beginn der Desorption im adsorbierend wirkenden Bereich erreichen, auch wenn die Desorptionstemperatur etwas niedriger als die Light-Off-Temperatur liegt.

Mit dieser Auslegung setzt die Wirksamkeit des katalytisch wirkenden Bereiches ein, bevor im adsorbierend wirkenden Bereich der Desorptionsprozeß einsetzt. Ein Durchtritt von HC durch eine derartige Adsorber-Katalysator-Kombination kann damit wesentlich vermindert oder ganz unterbunden werden.

Mit der vorgeschlagenen Ausbildung der Adsorber-Katalysator-Kombination ist eine wirksame Abgasreinigung nach einem Kaltstart der Brennkraftmaschine möglich, ohne daß hierzu zusätzliche Heizsysteme, wie beispielsweise eine elektrische Heizung oder ein Brenner notwendig sind.

Die vorgeschlagene Ausbildung läßt sich auch über die Anwendung in der vorliegenden Adsorber-Katalysator-Kombination hinaus stets dann vorteilhaft einsetzen, wenn ein Katalysator einem anderen System nachgeschaltet ist. Dies gilt insbesondere in Systemen mit adsorbierend - katalytisch wirkender Adsorberbeschichtung (Integralbeschichtung) und nachgeschaitetem Katalysator sowie in Systemen mit einer bekannten Anordnung von einem nur adsorbierend beschichteten Träger mit einem nachgeschaltetem Katalysator.

In den Unteransprüchen sind vorteilhafte Weiterbildungen der Erfindung dargestellt.

So ist es vorteilhaft bei der Auslegung von Geometrie und Werkstoff der adsorbierend wirkenden Zonen höhere Wandstärke, geringere Zelldichte, höhere Wärmekapazität, höhere spezifische Wärmekapazität, höhere Dichte des Trägermateriales, geringere Oberfläche oder keine bzw. verminderte Oberflächenstruktur (glatte Oberfläche) vorzusehen. Demgegenüber sind bei Auslegung von Geometrie und Werkstoff der katalytisch wirkenden Zonen die folgenden, gegenteiligen Maßnahmen anwendbar: geringere Wandstärke, höhere Zelldichte, geringere Wärmekapazität, geringere spezifische Wärmekapazität, geringere Dichte des Trägermateriales, größere Oberfläche oder vergrößerte Oberflächenstruktur (rauhe Oberfläche, Strömungsunterbrechungen, Strömungsstörstellen, Srömungsumlenkungen). Der hiermit erzielte Vorteil ist in einer gegenüber der Temperatur des Abgases geringeren Temperaturdifferenz in den katalytisch wirkenden Zonen als in den adsorbierend wirkenden Zonen zu sehen, die es ermöglicht, in einer stromab einer adsorbierend wirkenden Zone angeordneten katalytisch wirkenden Zone im Eintrittsbereich höhere Temperaturen als im Austrittsbereich der adsorbierend wirkenden Zone zu erreichen.

In zusätzlichen, grundsätzlichen Betrachtungen zur vorliegenden Adsorber-Katalysator-Kombination wurde erkannt, daß ein schneller Temperaturanstieg in der Adsorber-Katalysator-Kombination ein rasches Erreichen der Ught-Off-Temperatur des katalytisch wirkenden Bereiches und damit eine kurze Zeit, in der HC adsorbiert werden muß, bewirkt. Eine Verkürzung der Aufheizzeit des katalytisch wirkenden Bereiches bis zur Light-Off-Temperatur ermöglicht somit eine Volumenverkleinerung des adsorbierend wirkenden Bereiches.

Ein Maß für die Aufheizung, d.h. die je Zeiteinheit aufnehmbare Wärmemenge, ist das Produkt aus Wärmeleitfähigkeit, Dichte und spezifischer Wärmekapazität des verwendeten Trägers. Je höher dieses Produkt ist, desto mehr Wärme kann ein vorgegebener Träger bei gleicher Temperaturerhöhung im gleichen Zeitraum aufnehmen. Mit Kenntnis dieses Zusammenhanges kann die Geschwindigkeit der Aufheizung von adsorbierend und katalytisch wirkenden Bereich bei gegebenem Abgasmassenstrom und gegebene Abgastemperatur auf den Bedarfsfall eingestellt werden, und zwar wie oben dargelegt durch die Wahl der Werkstoffeigenschaften der Träger im adsorbierend und katalytisch wirkenden Bereich.

Um eine kurze Aufwärmphase und damit ein kleines Volumen des adsorbierend wirkenden Bereiches zu erzielen, sind eine geringe Dichte und eine geringe spezifische Wärmekapazität sowohl des Trägers für den adsorbierend wirkenden Bereich wie auch des Trägers für den katalytisch wirkenden Bereich anzustreben. Das Volumen des adsorbierend wirkenden Bereiches muß dabei so groß gewählt werden, daß die bis zum Erreichen des Light-Off-Temperatur des nachgeschalteten Katalysators im von der Brennkraftmaschine gelieferten Abgasstrom anfallende Menge von HC adsorbiert werden kann. Das Volumen des katalytisch wirkenden Bereiches muß so groß gewählt werden, daß eine vollständige Umsetzung der im Abgasstrom befindlichen Stoffe in jedem Betriebspunkt der Brennkraftmaschine möglich ist.

Zusätzlich kann auch die Temperaturverteilung im Trägermaterial berücksichtigt werden, die durch die Wärmeleitfähigkeit des Trägermaterials beeinflußt ist: Eine hohe Temperaturleitfähigkeit begünstigt eine gleichmäßigere Temperaturverteilung in axialer Richtung stärker als eine kleine Temperaturleitfähigkeit. Für den adsorbierend wirkenden Bereich ist demnach eine hohe Temperaturleitfähigkeit günstig, da durch sie Temperaturspitzen abgebaut werden und damit der Desorptionsbeginn verzögert werden kann.

Als weitere Einflußgrößen für die Aufheizzeit sind die für die Wärmeübertragung zur Verfügung stehenden Flächen und aufzuheizenden Massen zu betrachten: Träger mit einer kleinen Masse und einer großen Oberfläche verkürzen die Aufheizzeit, während Träger mit einer großen Masse und einer kleinen Oberfläche die Aufheizzeit verlängern.

Schließlich ist es möglich, neben der Temperatur auch die Konzentration des zu adsorbierenden Stoffes (hier: HC) im Abgas bei der Adsorption zu berücksichtigen. Günstig für eine hohe Adsorption von HC sind eine niedrige Trägertemperatur im adsorbierend wirkenden Bereich und hohe HC-Konzentrationen. Günstig für eine Desorption sind hingegen eine hohe Trägertemperatur im adsorbierend wirkenden Bereich und niedrige HC-Konzentrationen.

Ferner wird vorgeschlagen, die Tiefe der einzelnen Zonen so zu wählen, daß eine Matrix-Temperatur am Eintritt einer katalytisch wirkenden Zone schon oberhalb der Light-off-Temperatur liegt, wenn die Matrix-Temperatur am Austritt der vorgeschalteten adsorbierend wirkenden Zone noch unterhalb Desorptionstemperatur liegt.

Von Vorteil ist es auch, als letzte Zone eine katalytisch wirkende Zone vorzusehen. Durch diese Maßnahme ist sichergestellt, daß auch die aus der in Strömungsrichtung gesehen letzten adsorbierenden Zone austretenden Abgasbestandteile umgesetzt werden und nicht aus der Adsorber-Katalysator-Kombination austreten können.

Es wird darüber hinaus vorgeschlagen, die Adsorber-Katalysator-Kombination als Stapel aus Trägermaterial-Scheiben aufzubauen, die gleiche äußere Durchmesser bei ggf. unterschiedlichen Längen aufweisen und wechselweise adsorbierend bzw. katalytisch beschichtet sind. Bei diesem Aufbau können bekannte, beispielsweise auf metallische oder keramische Träger oder Kombinationen hiervon verwendet werden. Die Scheiben können mit oder ohne Abstand aufeinanderfolgen. Darüber hinaus ist es mit diesem Aufbau möglich, die einzelnen Bestandteile der Kombination zu standardisieren und über die Anzahl der verwendeten Trägerscheiben dem zur Abgasreinigung benötigen Volumen an katalytischem bzw. adsorbierendem Material anzupassen. Durch diese Standardisierung können die Herstellkosten deutlich gesenkt werden.

Die Erfindung ist nicht nur auf die Kombination aus adsorbierend wirkenden Zonen und katalytisch wirkenden Zonen, sondern ausdrücklich auch auf die Kombination aus adsorbierend-katalytisch wirksamen Zonen mit nachfolgenden katalytisch wirksamen Zonen anwendbar.

Die Erfindung ist nachstehend anhand des in den Figuren dargestellten Ausführungsbeispieles näher erläutert. Es zeigen:

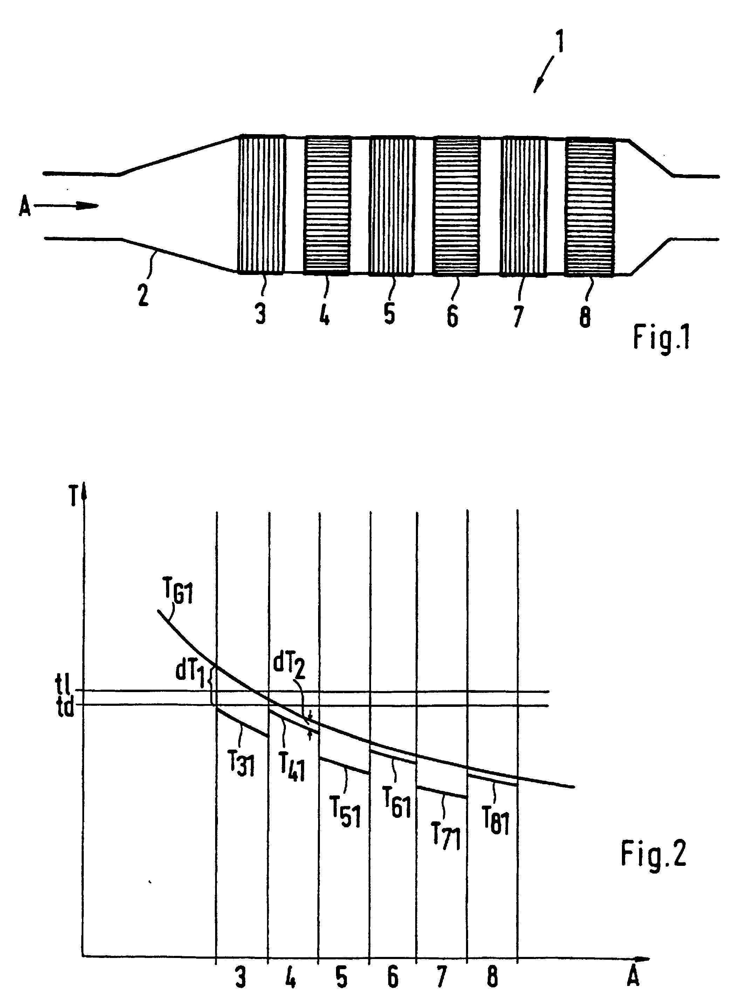

- Fig. 1: einen Schnitt durch eine Adsorber-Katalysator-Kombination,
- Fig. 2: ein Temperturschaubild zur Darstellung der Temperaturverteilung innerhalb der Adsorber-Katalysator-Kombination vor Erreichen der Desorptions-Temperatur und der Light-Off-Temperatur kurz nach dem Kaltstart einer Brennkraftmaschine,
- Fig. 3: ein Temperturschaubild zur Darstellung der zeitlichen Entwicklung der Temperaturverteilung innerhalb der Adsorber-Katalysator-Kombination nach Erreichen der Desorptions-Temperatur und der Light-Off-Temperatur nach dem Kaltstart einer Brennkraftmaschine und
- Fig. 4: ein Schaubild zur Darstellung der zeitlichen Entwicklung der Konzentration von HC innerhalb der Adsorber-Katalysator-Kombination nach dem Kaltstart einer Brennkraftmaschine.

Eine mit 1 bezeichneten Adsorber-Katalysator-Kombination ist stromab einer nicht gezeigten Brennkraftmaschine in deren Abgasstrang angeordnet. Das Abgas durchströmt hierbei die Adsorber-Katalysator-Kombination 1 in der mit dem Pfeil A bezeichneten Richtung. Die Adsorber-Katalysator-Kombination 1 besteht aus einem Gehäuse 2, in dem Trägerscheiben 3 bis 8 gehalten sind. Die Tragerscheiben 3 bis 8 sind hinsichtlich ihrer äußeren geometrischen Abmessungen mit Ausnahme der Lange in Strömungsrichtung A gleich ausgebildet und unterscheiden sich in der auf die Tragerscheiben aufgebrachten Beschichtung: während die Trägerscheiben 3, 5 und 7 mit adsorbierend wirkendem Material beschichtet sind, sind die Tragerscheiben 4, 6 und 8 mit einem katalytisch wirkenden Material beschichtet. Die Desorptionstemperatur des verwendeten adsorbierend wirkenden Materiales liegt geringfügig unterhalb des Light-off-Punktes des verwendeten katalytisch wirkenden Materiales.

Die Tragerscheiben 3 bis 8 sind so angeordnet, daß in Strömungsrichtung A auf eine adsorbierend wirkende Trägerscheibe eine katalytisch wirkende Trägerscheibe folgt. Die in Strömungsrichtung A gesehen erste Tragerscheibe 3 ist hierbei adsorbierend wirkend beschichtet, während die in Strömungsrichtung A gesehen letzte Trägerscheibe 8 katalytisch wirkend beschichtet ist.

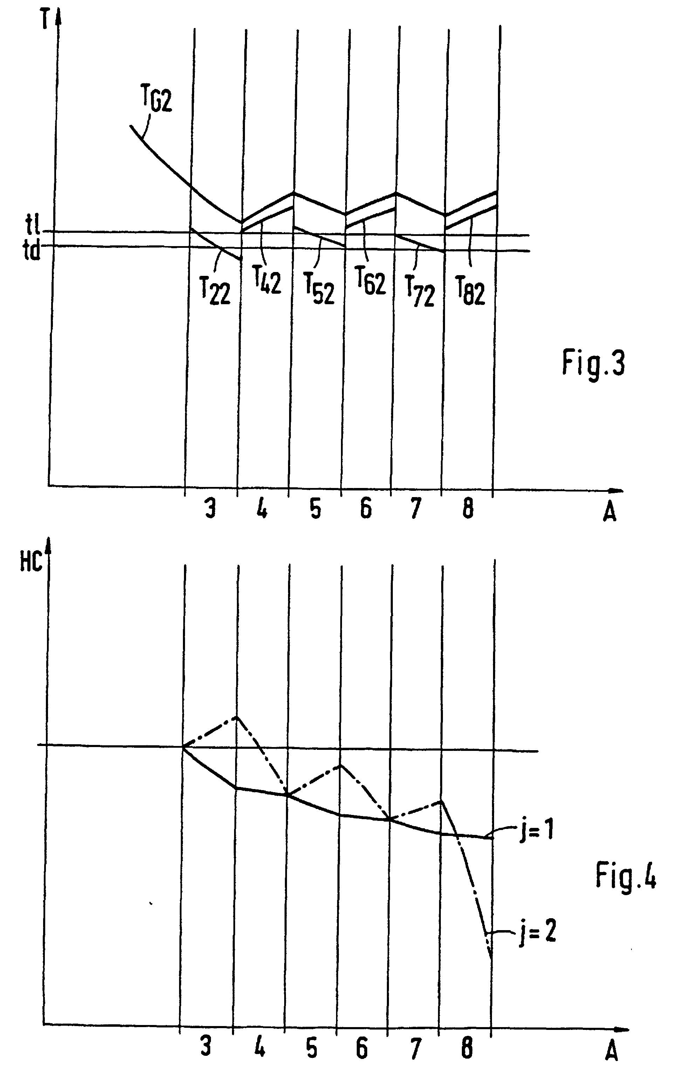

In den Fig. 2 und 3 sind Abgastemperaturen T_{G1} und Matrixtemperaturen T_{IJ} der Trägerscheiben 3 bis 8 zu verschiedenen Zeitpunkten j=1,2 für die in Fig. gezeigte Anordnung der Trägerscheiben 3 bis 8 dargestellt.

Die Wirkung dieser Anordnung der Tragerscheiben 3 bis 8 ist anhand des in Fig. 2 dargestellten Temperaturschaubildes naher erläutert. In Fig. 2 ist hierzu die Temperatur T in der Tragermitte in der Adsorber-Katalysator-Kombination 1 in Stromungsrichtung A vor Erreichen einer Desorptions-Temperatur td und einer Light-Off-Temperatur tl kurz nach dem Kaltstart einer Brennkraftmaschine dargestellt. In Stromungsrichtung A sind hierbei die Weganteile gekennzeichnet, die das Abgas innerhalb der einzelnen Tragerscheiben 3 bis 8 zurücklegt. Die Temperatur des Abgasstromes ist mit T_{G1} bezeichnet, während Matrix-Temperaturen T_{IJ} der einzelnen Bereiche durch die Bezugszeichen der zugehörigen Trägerscheiben 3 bis 8, d.h. i= 3...8, gekennzeichnet sind. Die in Fig. 2 dargestellte Temperatursituation stellt sich kurz nach dem Kaltstart der Brennkraftmaschine ein, d.h. es hat bereits eine gewisse Erwärmung der Trägerscheiben 3 bis 8 stattgefunden. Die Light-off-Temperatur tl der katalytisch wirkend beschichteten Trägerscheiben 4, 6 und 8 sowie die Desorptionstemperatur td der adsorbierend beschichteten Tragerscheiben 3, 5 und 7 sind ebenfalls eingetragen, wobei die Desorptionstemperatur td geringfügig unterhalb der Light-off-Temperatur tl liegt.

Zum dargestellten Zeitpunkt j=1 ist in keiner der Tragerscheiben 3 bis 8 die Desorptionstemperatur td bzw. die Light-Off-Temperatur tl überschritten.

Die adsorbierend wirkend beschichteten Trägerscheiben 3, 5 und 7 weisen einen geringeren Wärmeübergang auf als die katalytisch wirkend beschichteten Tragerscheiben 4, und 8. Hierzu wurden in erster Linie die adsorbierend wirkend beschichteten Tragerscheiben 3, 5 und 7 so gestaltet, daß sie eine geringere Zelldichte als die katalytisch wirkend beschichteten Trägerscheiben 4, und 8 aufweisen. Durch die geringere Zelldichte ist die Oberflache der Tragerscheiben 3, 5 und 7 geringer als die der Tragerscheiben 4, 6 und 8. Bei ersten Messungen wurde festgestellt, daß die Differenz zwischen dem Temperaturunterschied dT₁ zwischen der Temperatur des Abgasstromes T_{G} und der Matrix-Temperatur T₃ einer Trägerscheibe 3 mit geringer Zelldichte deutlich über dem Temperaturunterschied dT₂ zwischen der Temperatur des Abgasstromes T_{G} und der Matrix-Temperatur T₄ einer Trägerscheibe 4 mit hoher Zelldichte im Bereich liegt.

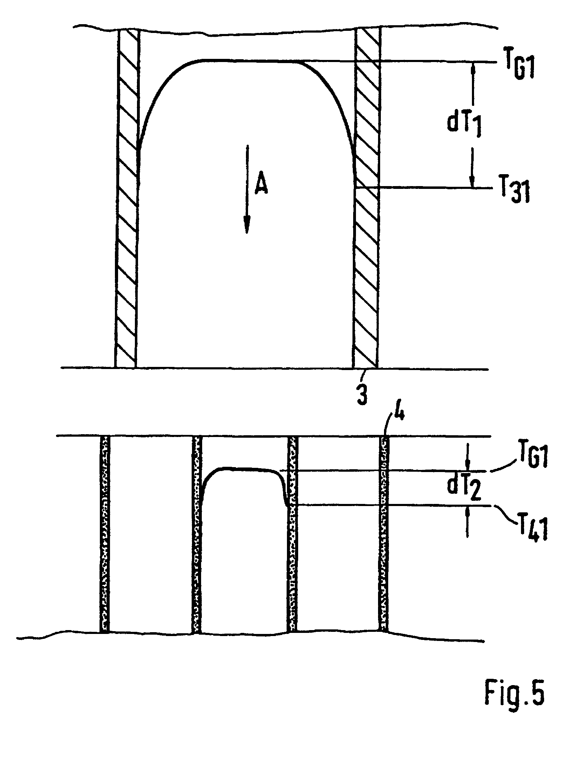

In Fig. 5 ist die Wirkung dieser Maßnahmen anhand einer Temperaturverteilung in einem Schnitt durch die ersten beiden Trägerscheiben 3 und 4 dargestellt: auf dem Stromungsweg in Stromungrichtung A durch die erste Trägerscheibe 3 stellt sich zwischen der Temperatur des Abgasstromes T_{G} und der Matrix-Temperatur T₃ ein großer Temperaturunterschied dT₁ ein. Die erste Trägerscheibe 3 ist beispielsweise aus einem metallischen Werkstoff gefertigt und weist große Zellen, d.h. eine geringe Zelldichte, auf. Auf dem Stromungsweg durch die zweite Tragerscheibe 4, die beispielsweise aus einem keramischen Werkstoff gefertigt ist und kleine Zellen, d.h. eine hohe Zelldichte, aufweist, stellt sich zwischen der Temperatur des Abgasstromes T_{G} und der Matrix-Temperatur T₄ ein geringerer Temperaturunterschied dT₂ ein. Die Differenz zwischen dem ersten Temperaturunterschied dT₁ und dem zweiten Temperaturunterschied dT₂ kann mehr als 50°C betragen.

Wie in Fig. 2 deutlich zu erkennen, ist infolge der Maßnahmen bei der Auslegung der Tragerscheiben 3 bis 8 die Matrixtemperatur der adsorbierend beschichteten Tragerscheiben 3, 5 und 7 zumindest in Teilbereichen geringer als die Matrixtemperatur der jeweils nachfolgenden katalytisch wirkend beschichteten Trägerscheiben 4, 6 oder 8.

Fig. 3 verdeutlicht den Verlauf der Abgas- und Matrixtemperaturen bei zunehmender Aufheizung zu einem Zeitpunkt nach Erreichen der Desorptions-Temperatur td und der Light-Off-Temperatur tl. Zum nun betrachteten Zeitpunkt j=2 ist im Bereich der ersten adsorbierend beschichteten Trägerscheibe 3 die Desorptionstemperatur td und in der nachfolgenden katalytisch wirkenden Trägerscheibe 4 die Light-Off-Temperatur tl erreicht. Durch die katalytische Umsetzung und exotherme Reaktion steigt im Bereich der katalytisch wirkenden Tragerscheibe 4 die Temperatur überproportional auf die Matrixtemperatur T₄₂ an. Die höhere Austrittstemperatur an der katalytisch wirkenden Trägerscheibe 4 bewirkt einen entsprechenden Temperaturanstieg T₅₂ in der nachfogenden adsorbierend wirkenden Trägerscheibe 5 auf eine Temperatur oberhalb der Desorptionstemperatur td. Hiermit steigt auch die Austrittstemperatur aus der adsorbierend wirkenden Trägerscheibe 5 weiter an und die Temperatur T₆₂ in der nachfolgenden katalytisch wirkenden Trägerscheibe 6 überschreitet die Light-Off-Temperatur tl, so daß auch hier die katalytische Umsetzung mit entsprechend weiterer Temperaturerhöhung eingeleitet wird. Analog vollzieht sich dieser Vorgang in den Trägerscheiben 7 und 8.

Fig. 4 verdeutlicht den Verlauf der Konzentration von HC parallel zu den in Fig. 3 dargestellten Temperaturverläufen. Zum Zeitpunkt j=1 wird HC in den adsorbierend wirkenden Trägerscheiben 3, 5 und 7 adsorbiert. Damit sinkt über der Länge der adsorbierend wirkenden Trägerscheiben 3, 5 und 7 die HC-Konzentration stetig ab. Im Bereich der katalytisch wirkenden Trägerscheiben 4, 6 und 8 bleibt die HC-Konzentration im wesentlichen konstant. Wird zum Zeitpunkt j=2 die Desorptionstemperatur td erreicht, so setzt im Bereich der ersten adsorbierend wirkenden Trägerscheibe 3 infolge Desorption eine Konzentrationserhöhung ein. Die erste katalytisch wirkende Trägerscheibe 4 hat zu diesem Zeitpunkt j=2 ihre Light-Off-Temperatur tl überschritten und vermindert demzufolge die HC-Konzentration. Die nachfolgende, adsorbierend wirkend beschichtete Trägerscheibe 5 desorbiert ebenfalls HC, da ihre Temperatur T₅₂ oberhalb der Desorptionstemperatur td liegt. Infolge dessen steigt die HC-Konzentration im Verlauf dieser Trägerscheibe 5 an. Die nachfolgende katalytisch wirkende Tragerscheibe 6 vermindert die angestiegene Konzentration wiederum aufgrund der hier wirkenden katalytischen Umsetzung. Diese Vorgänge der Desorption und katalytischen Umsetzung vollziehen sich analog in den Tragerscheiben 7 und 8.

Auslegungsgemaß gelingt in der letzten katalytisch wirkenden Trägerscheibe 8 eine im wesentlichen vollkommene Umsetzung von HC, während die ersten beiden katalytisch wirkenden Trägerscheiben 4 und 6 so ausgelegt sind, daß eine Umwandlung von HC nur bis zu etwa der HC-Konzentration erfolgt, die zuvor im Eintritt der nachfolgenden adsorbierend wirkenden Trägerscheibe 5 bzw. 7 vorhanden war. Durch diese Maßnahme wird verhindert, daß durch eine zu niedrige HC-Konzentration im Eintritt der zweiten und dritten adsorbierend wirkenden Trägerscheibe 5 und 7 eine Desorption bereits dann eingeleitet wird, wenn die Temperatur in der jeweils nachfolgenden katalytisch wirkenden Trägerscheibe für eine katalytische Umsetzung noch nicht ausreichen wurde.

Wie aus Fig. 2, 3 und 4 deutlich zu erkennen ist, ist es mit der erfindungsgemäßen Anordnung durch eine entsprechende Wahl der Tiefe der durch die einzelnen Tragerscheiben 3 bis 8 gebildeten Zonen möglich, ein Durchschlagen von Abgasbestandteilen durch die Adsorber-Katalysator-Kombination 1 weitestgehend zu vermindern, da aufgrund der Temperaturdifferenzen zwischen den adsorbierend beschichteten Tragerscheiben 3, und 7 und den katalytisch beschichteten Trägerscheiben 4, und 8 die Desorption erst dann einsetzt, wenn die auf die desorbierende Trägerscheibe folgende katalytisch beschichtete Trägerscheibe bereits katalytisch wirksam ist.

## Patentansprüche

1. Adsorber-Katalysator-Kombination für Brennkraftmaschinen, wobei innerhalb der Adsorber-Katalysator-Kombination (1) bezogen auf einen Abgasstrom (A) hintereinanderliegend zwei oder mehr Zonen (3 bis 8) von abwechselnd adsorbierend und katalytisch wirkendem Material vorgesehen sind, daß die adsorbierend wirkenden Zonen (3, 5, 7) thermodynamisch so ausgelegt sind, daß sie einen geringeren Wärmeübergang und/oder eine höhere Wärmekapazität aufweisen als die katalytisch wirkenden Zone (4, 6, 8), **dadurch gekennzeichnet, daß** die adsorbierend wirkenden Zonen (3, 5, 7) eine geringere Zelldichte und eine glatte Oberfläche aufweisen und die katalytisch wirkenden Zonen (4, 6, 8) eine hohe Zelldichte und eine rauhe Oberfläche aufweisen und daß eine Temperaturleitfähigkeit innerhalb der adsorbierend wirkenden Zone (3, 5, 7) größer gewählt ist als innerhalb der katalytisch wirkenden Zone (4, 6, 8).

2. Adsorber-Katalysator-Kombination nach Anspruch 1 oder 2, **dadurch gekennzeichnet, daß** die Tiefe der Zonen (3 bis 8) so gewählt ist, daß eine Matrix-Temperatur (Tᵢ) am Eintritt einer katalytisch wirkenden Zone (4, 6, 8) schon oberhalb der Light-off-Temperatur liegt, wenn die Matrix-Temperatur am Austritt der vorgeschalteten adsorbierend wirkenden Zone (3, 5, 7) noch unterhalb der Desorptionstemperatur liegt.

3. Adsorber-Katalysator-Kombination nach einem der vorstehenden Ansprüche, **dadurch gekennzeichnet, daß** als letzte Zone eine katalytisch wirkende Zone (8) vorgesehen ist.

4. Adsorber-Katalysator-Kombination nach einem der vorstehenden Ansprüche, **dadurch gekennzeichnet, daß** die adsorbierend wirkenden Zonen (3, 5, 7) zusätzlich in geeigneter Weise katalytisch wirksam beschichtet sind.

5. Adsorber-Katalysator-Kombination nach einem der vorstehenden Ansprüche, **dadurch gekennzeichnet, daß** die Zonen (3 bis 8) in Form von scheibenförmigen Trägermaterial ausgebildet sind, die mit einer adsorbierend bzw. katalytisch wirkenden Beschichtung versehen sind und die Scheiben (3 bis 8) hinsichtlich ihrer äußeren Durchmesser gleich sind.

6. Adsorber-Katalysator-Kombination nach Anspruch 8, **dadurch gekennzeichnet, daß** die Scheiben (3 bis 8) in Form eines Stapels angeordnet sind.

7. Adsorber-Katalysator-Kombination nach einem der vorstehenden Ansprüche, **dadurch gekennzeichnet, daß** die adsorbierend wirkenden Zonen (3, 5, 7) eine höhere Wandstärke aufweisen als die katalytisch wirkenden Zone (4, 6, 8).

8. Adsorber-Katalysator-Kombination nach einem der vorstehenden Ansprüche, **dadurch gekennzeichnet, daß** die Zonen (3 bis 8) hinsichtlich der Auswahl von Werkstoff und geometrischen Abmessungen thermodynamisch so ausgelegt sind, daß ihre Aufheizzeit minimiert ist

## Claims

1. A combination of an adsorber and a catalytic converter for internal-combustion engines, wherein two or more zones (3 to 8) of material acting alternately in an adsorbing and catalytic manner are provided one behind the other with respect to an exhaust-gas flow (**A**) inside the combination of an adsorber and a catalytic converter (1), the zones (3, 5, 7) acting in an adsorbing manner are designed in terms of thermodynamics in such a way that they have a smaller heat transition and/or a higher heat capacity than the zones (4, 6, 8) acting in a catalytic manner, **characterized in that** the zones (3, 5, 7) acting in an adsorbing manner have a lower cell density and a smooth surface and the zones (4, 6, 8) acting in a catalytic manner have a high cell density and a rough surface, and a temperature conductivity inside the zone (3, 5, 7) acting in an adsorbing manner is selected to be greater than inside the zone (4, 6, 8) acting in a catalytic manner.

2. A combination of an adsorber and a catalytic converter according to Claim 1 or 2, **characterized in that** the depth of the zones (3 to 8) is selected in such a way that a matrix temperature (Tⱼ) at the entry of a zone (4, 6, 8) acting in a catalytic manner is already above the light-off temperature when the matrix temperature at the exit of the preceding zone (3, 5, 7) acting in an adsorbing manner is still below the desorption temperature.

3. A combination of an adsorber and a catalytic converter according to one of the preceding Claims, **characterized in that** a zone (8) acting in a catalytic manner is provided as the last zone.

4. A combination of an adsorber and a catalytic converter according to one of the preceding Claims, **characterized in that** the zones (3, 5, 7) acting in an adsorbing manner are additionally coated in a suitable manner so as to be catalytically active.

5. A combination of an adsorber and a catalytic converter according to one of the preceding Claims, **characterized in that** the zones (3 to 8) are constructed in the form of disc-shaped carrier material and are provided with a coating acting in an adsorbing or catalytic manner respectively, and the discs (3 to 8) are the same with respect to their external diameters.

6. A combination of an adsorber and a catalytic converter according to Claim 8, **characterized in that** the discs (3 to 8) are arranged in the form of a stack.

7. A combination of an adsorber and a catalytic converter according to one of the preceding Claims, **characterized in that** the zones (3, 5, 7) acting in an adsorbing manner have a greater wall thickness than the zones (4, 6, 8) acting in a catalytic manner.

8. A combination of an adsorber and a catalytic converter according to one of the preceding Claims, **characterized in that** the zones (3 to 8) are designed in terms of thermodynamics in such a way with respect to the choice of material and geometrical dimensions that their heating time is minimized.

## Revendications

1. Combinaison adsorbeur-catalyseur pour moteurs à combustion interne, deux zones (3 à 8) ou plus de matériaux agissant alternativement par adsorption et de manière catalytique étant prévues à l'intérieur de la combinaison adsorbeur-catalyseur (1), l'une derrière l'autre par rapport à un courant de gaz d'échappement (A), les zones à action adsorbante (3, 5, 7) étant dimensionnées sur le plan thermodynamique de manière à présenter un transfert de chaleur inférieur et/ou une capacité thermique supérieure à la zone à action catalytique (4, 6, 8), **caractérisée en ce que** les zones à action adsorbante (3, 5, 7) présentent une densité cellulaire inférieure et une surface lisse, et les zones à action catalytique (4, 6, 8) présentent une densité cellulaire élevée et une surface rugueuse, et **en ce qu'**on choisit une conductibilité de la température plus grande à l'intérieur de la zone à action adsorbante (3, 5, 7) qu'à l'intérieur de la zone à action catalytique (4, 6, 8).

2. Combinaison adsorbeur-catalyseur selon la revendication 1, **caractérisée en ce que** la profondeur des zones (3 à 8) est choisie de manière qu'une température de matrice (Tⱼ) à l'entrée d'une zone à action catalytique (4, 6, 8) se situe déjà au-dessus de la température light-off lorsque la température de la matrice à la sortie de la zone à action adsorbante (3, 5, 7) située en amont se situe encore au-dessous de la température de désorption.

3. Combinaison adsorbeur-catalyseur selon l'une des revendications précédentes, **caractérisée en ce qu'**il est prévu comme dernière zone une zone à action catalytique (8).

4. Combinaison adsorbeur-catalyseur selon l'une des revendications précédentes, **caractérisée en ce que** les zones à action adsorbante (3, 5, 7) présentent en outre un revêtement à action catalytique approprié.

5. Combinaison adsorbeur-catalyseur selon l'une des revendications précédentes, **caractérisée en ce que** les zones (3 à 8) sont réalisées sous la forme d'un matériau de support en forme de disque qui est pourvu d'un revêtement à action adsorbante, respectivement catalytique, et les disques (3 à 8) présentent le même diamètre extérieur.

6. Combinaison adsorbeur-catalyseur selon la revendication 5, **caractérisée en ce que** les disques (3 à 8) sont disposés sous la forme d'une pile.

7. Combinaison adsorbeur-catalyseur selon l'une des revendications précédentes, **caractérisée en ce que** les zones à action adsorbante (3, 5, 7) présentent une plus grande épaisseur de paroi que la zone à action catalytique (4, 6, 8).

8. Combinaison adsorbeur-catalyseur selon l'une des revendications précédentes, **caractérisée, en ce qui** concerne le choix du matériau et les dimensions géométriques, en ce que les zones (3 à 8) sont conçues sur le plan thermodynamique de manière que leur temps de chauffage soit minimisé.
